# FASCICULE DE BREVET EUROPEEN

(11) **EP 2 621 766 B1**
(45) Date de publication et mention de la délivrance du brevet: **01.07.2015**
(21) Numéro de dépôt: 11771218.2
(22) Date de dépôt: 19.09.2011
(51) Int. Cl.: B60R 21/34, B62D 25/08

(54) **TRAVERSE INFÉRIEURE DE BAIE DÉFORMABLE**
DEFORMIERBARER UNTERER WINDSCHUTZSCHEIBEN-QUERTRÄGER
DEFORMABLE LOWER WINDSCREEN CROSS-MEMBER

(30) Priorité: 30.09.2010 FR 1057908
(43) Date de publication de la demande: 07.08.2013
(73) Titulaire: Renault S.A.S., 92100 Boulogne-Billancourt (FR)
(72) Inventeur: BISROR, Olivier, F-92350 Le Plessis Robinson (FR); CAMUS, Guillaume, F-78280 Guyancourt (FR)
(86) Numéro de dépôt international: PCT/FR2011/052141
(87) Numéro de publication internationale: WO 2012/042147

(56) Documents cités:
- DE-A1-102009 032 855
- US-B1- 6 193 304
- US-B1- 6 193 305

## Description

La présente invention se rapporte à un véhicule automobile comprenant une traverse inférieure de baie destinée à être installée à l'avant d'un véhicule automobile.

L'avant des véhicules automobiles présente une structure où viennent se rejoindre le pare-brise, le capot, et le tablier qui sépare le compartiment moteur de l'habitacle. La traverse inférieure de baie est solidaire du tablier de manière à pouvoir supporter le pare-brise sur laquelle il s'appuie. Aussi, la traverse inférieure est installée transversalement et elle s'étend, selon des composantes verticale et longitudinale du véhicule, entre une bordure inférieure du pare-brise et le tablier qui lui s'étend sensiblement à l'aplomb dudit pare-brise. Afin d'assurer son rôle de soutien du pare-brise, la traverse inférieure de baie doit être suffisamment résistante. Aussi, elle comprend usuellement deux parties transversales associées l'une à l'autre, une traverse inférieure de baie supérieure et une traverse inférieure de baie inférieure, de manière à former un caisson transversal, ou corps creux, sur lequel prend directement appui la bordure inférieure du pare-brise. Pour ce faire, parmi les deux parties transversales, une première partie présentant une bordure transversale de fixation et à l'opposé une bordure transversale de réception, est ajustée entre le tablier et le pare-brise. La première partie constitue la traverse inférieure de baie supérieure. La bordure de fixation est alors en prise sur le tablier, tandis que la bordure inférieure de pare-brise vient prendre appui dans la bordure transversale de réception. La seconde partie transversale de la traverse, présentant une bordure de liaison transversale et une bordure d'appui transversale opposée, est ajustée contre la première partie de façon que la bordure de liaison soit reliée à la première partie entre la première bordure de fixation et la première bordure de réception de la première partie et que la bordure d'appui soit reliée à la bordure transversale de réception de la première partie en formant un élément tubulaire avec cette dernière, lequel élément tubulaire constitue le caisson transversal. La seconde partie constitue la traverse inférieure de baie inférieure. En conséquence, la bordure inférieure de pare-brise est directement maintenue par le caisson transversal qui lui, prend appui latéralement dans la structure du véhicule automobile, et notamment sur les coupelles d'amortisseur.

Par ailleurs, la bordure de liaison de la seconde partie transversale divise la première partie, en une portion de réception qui s'étend vers la bordure de réception en formant une paroi du caisson transversal et en une portion de fixation opposée qui s'étend vers la bordure de fixation de la première partie et qui rejoint le tablier. Cette portion de fixation est par nature déformable et elle permet en cas de choc piéton, c'est-à-dire du mouvement relatif d'une personne vers le pare-brise du véhicule, que le pare-brise précisément puisse s'enfoncer de manière à dissiper une partie de l'énergie mécanique provoquée par le choc et ainsi préserver autant que faire se peut, les parties vitales dudit piéton et notamment la tête.

On pourra se référer au document US 6 193 304, lequel décrit une telle traverse inférieure d'amortissement.

Un véhicule automobile selon le préambule de la revendication 1 est décrit dans le document US 6 193 305 B1.

Cependant, le caisson transversal qui est nécessaire au support du pare-brise, limite les capacités de déformation de la portion de fixation précitée et parallèlement, les possibilités de dissiper l'énergie engendrée par le choc.

Aussi, un problème qui se pose et que vise à résoudre la présente invention est de fournir une traverse inférieure de baie qui tout en maintenant le pare-brise du véhicule automobile, présente des capacités de déformation accrues pour préserver les personnes lors d'un choc.

Dans ce but, la présente invention propose un vehicule automobile comprenant une traverse inféreure de baie avant de véhicule automobile, destinée à être installée transversalement dans un véhicule automobile entre une bordure inférieure de pare-brise et un tablier situé à l'aplomb du pare-brise, ladite traverse comprenant une première et une seconde parties transversales sensiblement parallèles entre elles, ladite première partie présentant une bordure de fixation apte à être reliée audit tablier et une bordure de réception opposée à ladite bordure de fixation pour recevoir ladite bordure inférieure de pare-brise, tandis que ladite seconde partie présente d'une part, une bordure de liaison reliée à ladite première partie entre ladite première bordure de fixation et ladite première bordure de réception en divisant ladite première partie en une portion de réception s'étendant vers ladite bordure de réception et en une portion de fixation opposée s'étendant vers ladite bordure de fixation, et d'autre part une bordure d'appui opposée à ladite bordure de liaison, lesdites seconde et première parties transversales étant destinées à former un caisson transversal pour augmenter la rigidité de ladite traverse, tandis que ladite première partie est apte à se plier le long de ladite bordure de liaison lorsque ledit pare-brise est enfoncé sous l'effet d'un choc. Selon l'invention, ladite bordure d'appui de ladite seconde partie est apte à être reliée audit tablier de manière à former ledit caisson transversal entre ladite seconde partie et ladite portion de fixation de ladite première partie dans une position écartée de ladite bordure inférieure de pare-brise, tandis que ladite portion de réception s'étend entre ledit caisson transversal et ladite bordure inférieure de pare-brise.

Ainsi, une caractéristique de l'invention réside dans la mise en oeuvre du caisson transversal, ou corps creux, non plus directement en contact avec la bordure inférieure de pare-brise, mais dans une position écartée de cette dernière, vers le tablier, tandis que la portion de réception de la première partie de traverse s'étend précisément, elle, entre le caisson transversal et la bordure inférieure de pare-brise. De la sorte, ce n'est plus directement le caisson transversal qui absorbe les efforts en cas de choc piéton, et d'enfoncement du pare-brise, mais la portion de réception de la première partie transversale qui tend alors à se plier vers le caisson le long de la bordure de liaison de la seconde partie reliée à la première partie de traverse. Le caisson transversal forme en effet une poutre dont les capacités de fléchissement sous contrainte sont bien plus faibles que celles d'une simple paroi comme la portion de réception de la première partie transversale. Aussi, grâce aux capacités de déformation de cette portion de réception, lors du choc piéton contre le pare-brise, ce dernier va s'enfoncer à mesure que la portion de réception qui le supporte se déforme plastiquement et se ploie.

Selon une caractéristique de l'invention particulièrement avantageuse, ladite portion de fixation de ladite première partie présente une zone transversale longeant ladite portion de réception sensiblement perpendiculairement à ladite seconde partie. Ainsi, la zone transversale forme avec la seconde partie deux parois adjacentes du caisson transversal à angle droit, ce qui améliore sa rigidité. Préférentiellement, ladite seconde partie présente un évidement formant une ouverture d'entrée à l'intérieur du caisson transversal. Cette ouverture d'entrée permet, notamment, l'arrivée de l'air pour le circuit de ventilation ainsi qu'on l'expliquera plus en détail ci-après.

En outre, et selon un mode de mise en oeuvre de l'invention particulièrement avantageux, ledit véhicule comporte une paroi inférieure transversale de conduit de chauffage, apte à être reliée audit tablier, et ladite bordure de fixation de ladite première partie est reliée audit tablier par l'intermédiaire de ladite paroi inférieure transversale. Cette paroi inférieure transversale de conduit de chauffage, s'étend selon une direction longitudinale du véhicule, depuis le tablier sur lequel elle prend appui, vers l'avant du véhicule à l'aplomb de la bordure inférieure du pare-brise et d'un bord du capot du véhicule adjacent à ladite bordure inférieure de pare-brise. Ainsi, la bordure de fixation de la première partie de traverse est solidaire du tablier par l'intermédiaire de la paroi inférieure transversale de conduit de chauffage.

De plus, ladite bordure d'appui de ladite seconde partie est préférentiellement reliée audit tablier également par l'intermédiaire de ladite paroi inférieure transversale de conduit de chauffage. De la sorte, la portion de paroi inférieure transversale comprise entre la bordure de fixation de la première partie de traverse et la bordure d'appui de la seconde partie, la seconde partie elle-même et la portion de fixation de la première partie, forment alors une structure tubulaire constituant le caisson transversal. Ce dernier est alors directement relié au tablier.

Par ailleurs, ladite paroi inférieure transversale de conduit de chauffage présente une première bordure transversale de paroi, apte à recevoir ladite bordure de fixation de ladite première partie, et une seconde bordure transversale de paroi opposée, apte à s'étendre à l'aplomb de ladite bordure de réception de ladite première partie. Ces deux bordures transversales de parois opposées sont recourbées l'une vers l'autre de manière à former un réceptacle. Outre le guidage de l'air vers le circuit de ventilation, ce réceptacle est également destiné à recevoir l'eau qui s'écoule entre le bord du capot et la bordure inférieure de pare-brise pour pouvoir l'évacuer ensuite.

Aussi, ladite paroi inférieure transversale de conduit de chauffage présente une portion transversale encaissée le long de ladite première bordure transversale de paroi dans un sens opposé à ladite portion de fixation de ladite première partie. De la sorte, l'eau qui s'écoule précisément entre le bord du capot et la bordure inférieure de pare-brise, s'achemine par gravité dans la portion transversale encaissée. Avantageusement, ladite portion transversale encaissée présente un orifice pour former une ouverture d'évacuation, le long du tablier. Un tel orifice est pratiqué dans une portion latérale de la paroi inférieure transversale.

Selon un mode de réalisation de l'invention particulièrement avantageux, ledit véhicule comporte en outre, deux coupelles latérales d'amortisseur situées sensiblement à l'aplomb de ladite bordure de réception de ladite première partie, et ladite paroi inférieure transversale de conduit de chauffage vient prendre appui sur lesdites coupelles latérales d'amortisseurs. De la sorte, la traverse inférieure est également en appui latéralement, par l'intermédiaire de la paroi inférieure transversale de conduit de chauffage, sur les coupelles latérales d'amortisseurs.

Avantageusement, lesdites première et seconde parties transversales de ladite traverse sont réalisées dans un matériau métallique déformable, de manière à pouvoir se déformer plastiquement lors d'un choc, l'énergie mécanique absorbée se dissipant alors sous la forme de chaleur.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective de trois quarts avant montrant un élément de structure d'un véhicule automobile incluant une traverse inférieure de baie selon l'invention ;
- la Figure 2 est une vue schématique en perspective de trois quarts arrière d'une partie de l'élément de structure représenté sur la Figure 1 ;
- la Figure 3 est une vue schématique en coupe axiale de la partie représentée sur la Figure 2 selon le plan III-III complétée par d'autres éléments ;
- la Figure 4 est une vue schématique en coupe axiale de l'élément de structure représenté sur la Figure 1 selon le plan IV-IV complété par d'autres éléments ; et,
- la Figure 5 est une vue schématique en perspective de trois quarts avant d'une autre partie de l'élément de structure représenté sur la Figure 1.

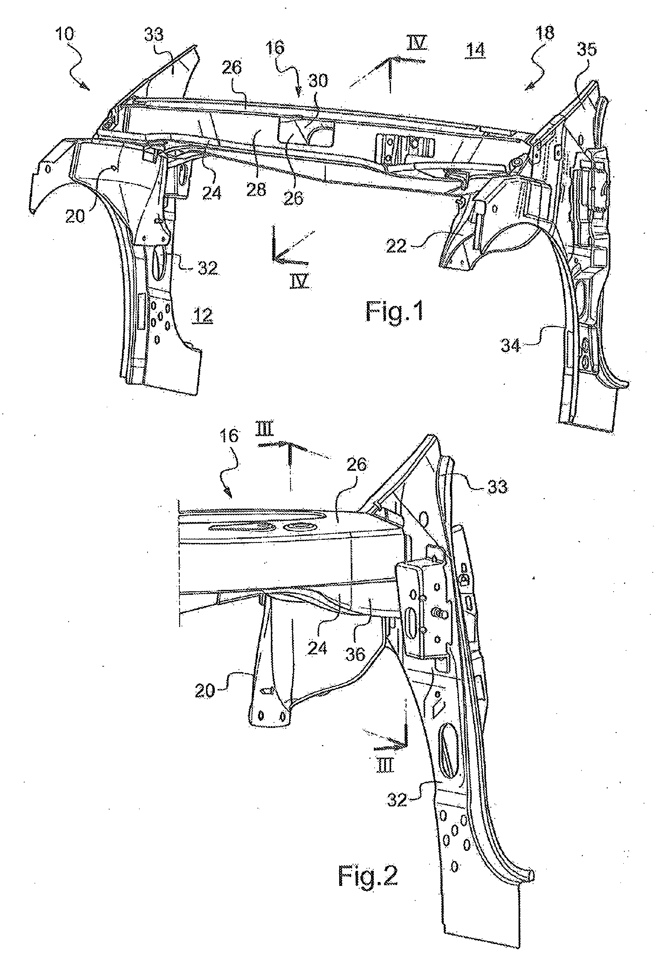

La Figure 1 illustre un élément de structure 10 d'un véhicule automobile qui s'étend transversalement entre un compartiment moteur 12 situé vers l'avant du véhicule automobile et un habitacle 14 situé vers l'arrière. L'élément de structure 10 présente une traverse inférieure de baie 16 qui s'étend transversalement sous la baie 18 du véhicule automobile. L'élément de structure 10 présente également deux rehausses de coupelle d'amortisseur opposées l'une de l'autre 20, 22 sur lesquelles vient prendre appui latéralement une paroi inférieure transversale de conduit de chauffage 24 que l'on décrira plus en détail ci-après. La traverse inférieure de baie 16 comporte une première partie 26, ou traverse inférieure de baie supérieure, ainsi qu'une seconde partie 28, ou traverse inférieure de baie inférieure. Cette dernière présente un évidement central 30 formant une première ouverture d'entrée à travers laquelle on aperçoit le prolongement de la première partie 26. Selon un mode de réalisation de l'invention particulièrement avantageux, les première et seconde parties 26, 28 sont respectivement réalisées d'une seule pièce en tôle métallique d'une épaisseur comprise entre 1 mm et 0,5 mm, par exemple 0,65 mm de manière à pouvoir se déformer plastiquement en cas de besoin comme on l'expliquera ci-après.

L'élément de structure 10 présente deux jambes opposées 32, 34 entre lesquelles, à l'aplomb de la traverse inférieure de baie 16, vient s'étendre un tablier non représenté sur cette Figure 1. En outre, verticalement, à l'opposé des jambes 32, 34, s'étendent deux montants latéraux 33, 35, ici représentés partiellement et contre lesquels vient s'appliquer respectivement les bordures latérales d'un pare-brise non représenté sur cette Figure 1.

On se reportera sur la Figure 2 où l'on retrouve, sous un autre angle, l'une 32 des deux jambes opposées, l'une 20 des deux rehausses de coupelles d'amortisseurs ainsi que la première partie 26 de la traverse inférieure de baie montrant deux parois perpendiculaires que l'on va décrire ci-après et qui est solidaire d'une première bordure recourbée 36 de la paroi inférieure transversale de conduit de chauffage 24 sur laquelle elle s'appuie.

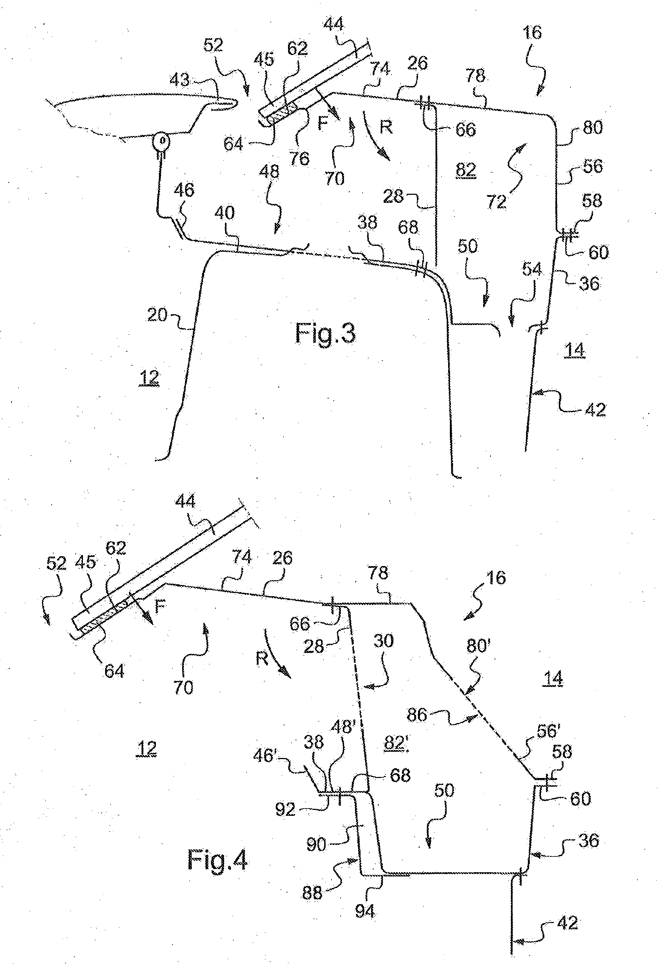

Ainsi, sur la Figure 3, on retrouve schématiquement la première partie 26 de traverse inférieure de baie ainsi que la seconde partie 28 qui apparaît sur là Figure 1. On retrouve également ladite une 20 rehausse de coupelle d'amortisseur et la première bordure recourbée 36 d'une paroi inférieure transversale de conduit de chauffage 38 qui s'appuie sur une partie supérieure 40 de la rehausse de coupelle d'amortisseur 20.

Au surplus, sont représentés sur cette Figure 3, des éléments complémentaires à l'élément de structure 10. Ainsi, un tablier 42 qui s'étend sensiblement verticalement entre l'habitacle 14 et le compartiment moteur 12, reçoit en appui la paroi inférieure transversale de conduit de chauffage 38 au niveau de la bordure recourbée 36. Aussi, un pare-brise 44 présentant une bordure inférieure de pare-brise 45, est représenté partiellement et il vient s'étendre au droit de la traverse inférieure de baie 16, la bordure inférieure de pare-brise 45 longeant le bord d'un capot 43. Avant de décrire en détail cette dernière, on décrira tout d'abord plus précisément la paroi inférieure transversale de conduit de chauffage 38 sur laquelle s'appuie précisément la traverse inférieure de baie 16 et qui elle-même s'appuie sur le tablier 42.

Ainsi, la paroi inférieure transversale de conduit de chauffage 38 s'étend non seulement latéralement mais aussi longitudinalement entre sa première bordure recourbée 36 située vers l'habitacle 14 et une seconde bordure recourbée opposée 46 située vers le compartiment moteur 12. De plus, elle est inclinée de la seconde bordure recourbée 46 vers la première bordure recourbée 36, et elle présente d'une part une première partie 48 en appui sur la partie supérieure 40 de la rehausse de coupelle d'amortisseur 20 et d'autre part une seconde partie encaissée 50 le long de la première bordure recourbée 36. De la sorte, la première partie 48 de la paroi inférieure transversale de conduit de chauffage 38 s'étend à l'aplomb d'une fente 52 qui s'étend transversalement entre le bord du capot 43 et la bordure inférieure de pare-brise 45 de manière à pouvoir recueillir l'eau qui s'écoule à travers cette fente 52. Aussi, par gravité l'eau s'écoule-t-elle vers la seconde partie encaissée 50 pour ensuite être évacuée à travers un orifice 54 ménagé dans le fond de cette seconde partie encaissée 50. Comme on l'expliquera dans la suite de la description, la paroi inférieure transversale de conduit de chauffage 38 permet également de guider l'air entrant à travers la fente 52 vers l'installation de ventilation.

On va maintenant décrire plus en détail la traverse inférieure de baie 16, prise au droit de la rehausse de coupelle d'amortisseur 20, toujours en référence à la Figure 3.

Ainsi, la traverse inférieure de baie 16, comprenant la traverse inférieure de baie supérieure, ou première partie 26, et la traverse inférieure de baie inférieure, ou seconde partie 28, s'étendent transversalement d'un montant 33 à l'autre 35. La première partie 26 présente une bordure de fixation 56 prolongée d'un retour 58 qui vient lui-même en appui sur un rebord 60 de la partie encaissée 50 en retour dans le prolongement de la première bordure recourbée 36. À l'opposé de la bordure de fixation 56, la première partie 26 présente une bordure de réception opposée 62 apte à recevoir la bordure inférieure de pare-brise 45. Cette dernière y est solidarisée par l'intermédiaire d'un cordon de mastic 64.

Quant à la seconde partie 28, elle présente une bordure de liaison 66 recourbée en retour et à l'opposé, une bordure d'appui 68 également recourbée en retour. La bordure de liaison 66 en retour est reliée à la première partie 26 par exemple par des points de soudure, tandis que la bordure d'appui 68 est reliée à la première partie de la paroi inférieure transversale de conduit de chauffage 38, au bord de la seconde partie encaissée 50. Elle peut également y être reliée par points de soudure. Ainsi, la bordure de liaison 66 reliée divise la première partie 26 en deux portions, une portion de réception 70 qui s'étend en potence, de la bordure de liaison 66 jusqu'à la bordure de réception 62, et une portion de fixation opposée 72, qui s'étend de la bordure de liaison 66 jusqu'à la bordure de fixation 56. La portion de réception 70 présente une première partie en tablette 74, qui s'étend sensiblement horizontalement entre la bordure de liaison 66 et le pare-brise 44, et une première partie inclinée 76, qui s'étend en regard du pare-brise 44, tandis que la portion de fixation opposée 72 présente une seconde partie en tablette 78, ou zone transversale, dans le prolongement de la première partie en tablette 74, et une seconde partie pliée en retour 80, qui s'étend jusqu'à la, bordure de fixation 56. La première partie en tablette 74 s'étend, selon la direction longitudinale du véhicule, sur une largeur comprise entre 80 mm et 150 mm, tandis que la seconde partie en tablette 78 s'étend sur une largeur comprise entre 100 mm et 200 mm. On observera que cette largeur varie transversalement, et notamment pour la dernière, entre le milieu de la traverse inférieure de baie 16 et ses extrémités.

En outre, la seconde partie 28 s'étend sensiblement perpendiculairement aux deux parties en tablette 74, 78 en prenant appui sur la paroi inférieure transversale de conduit de chauffage 38, tandis que la seconde partie pliée en retour 80 de la portion de fixation 72 s'étend sensiblement parallèlement à la seconde partie 28 pour prendre appui sur la première bordure recourbée 36 de la paroi inférieure transversale de conduit de chauffage 24. De la sorte, la seconde partie 28 de traverse inférieure de baie 16, la seconde partie en tablette 78, la seconde partie pliée en retour 80 d'une part, et la seconde partie encaissée 50 de la paroi inférieure transversale de conduit de chauffage 38, d'autre part, constitue un élément tubulaire dénommé ici caisson transversal 82 ou corps creux. Ce caisson transversal 82 s'appuie sur le tablier 42 mais aussi en partie à ses extrémités opposées sur la partie supérieure 40 des rehausses de coupelle d'amortisseur 20, 22. En revanche, il s'étend à distance du pare-brise 44 et plus particulièrement de la bordure inférieure 45, tandis que la portion de réception 70 s'étend-elle, en formant potence à partir du caisson transversal 82 au niveau de la bordure de liaison 66 de la seconde partie 28, pour rejoindre la bordure inférieure de pare-brise 45 et la recevoir dans sa bordure de réception opposée 62.

Avant de présenter les avantages de la structure décrite ci-dessus, on décrira tout d'abord en référence à la Figure 4, la même traverse inférieure de baie 16 prise non plus au droit de la rehausse de coupelle d'amortisseur 20, mais dans le plan médian du véhicule automobile précisément entre les rehausses de coupelle d'amortisseur 20. On n'y retrouve les mêmes éléments, certains avec une forme différente, car la traverse inférieure de baie 16 présente des parties galbées. Aussi, les parties de forme différente présenteront les mêmes références affectées d'un signe « ' ».

On retrouve ainsi à l'identique la bordure inférieure 45 de pare-brise 44 maintenue collée contre la bordure de réception 62 de la première partie 26 au moyen du cordon de mastic 64. On y retrouve également le tablier 42 supportant la seconde partie encaissée 50 de la paroi inférieure transversale de conduit de chauffage 38, laquelle présente une première partie 48' étranglée et prolongée par la bordure recourbée 46'. La seconde partie 28 a conservé sa forme et on retrouve l'évidement central 30 formant la première ouverture d'entrée d'air à l'intérieur du caisson transversal 82'. Cet air provient de la fente 52. Par ailleurs, la seconde partie en tablette 78' est moins large tandis que la seconde partie pliée en retour 80' est en plan incliné jusqu'à sa bordure de fixation 56'. La seconde partie pliée 80' présente un autre évidement 86 formant une sortie d'air vers le système de ventilation du véhicule.

Par ailleurs, et selon un mode de mise en oeuvre de l'invention particulièrement avantageux, un profilé en Z 88 est installé le long de la seconde partie encaissée 50 de manière à former un autre élément tubulaire 90 formant un second corps creux. L'une des ailes 92 du profilé en Z est reliée à la première partie 48' étranglée de la paroi inférieure transversale de conduit de chauffage 38, par le dessous, tandis que l'autre aile 94 est solidaire du fond de la seconde partie encaissée 50. Ainsi, le profilé en Z 88 forme un renfort central transversal et complémentaire accolé à la paroi inférieure transversale de conduit de chauffage 38. Cela permet notamment de rigidifier la zone qui s'étend transversalement sous la baie et par conséquent l'acoustique dans le véhicule automobile.

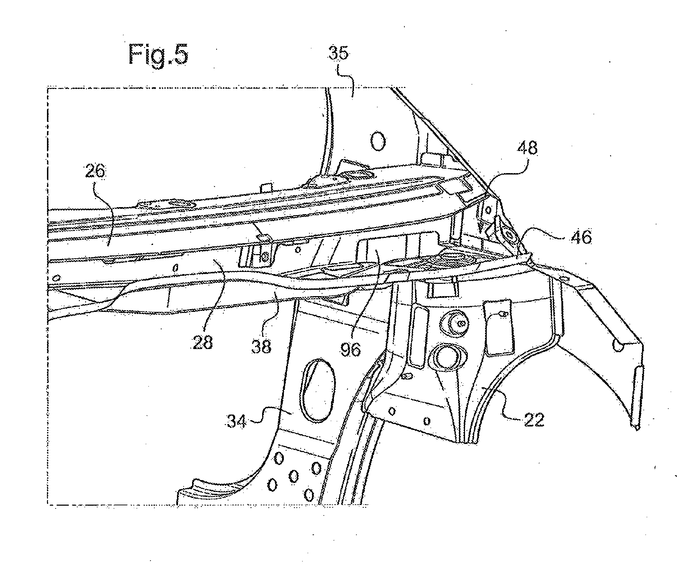

Enfin, on se référera à la Figure 5, pour compléter la description structurelle de la traverse inférieure de baie 16, avant de revenir sur les Figures 3 et 4, pour en décrire les fonctionnalités. Cette Figure 5 illustre l'autre extrémité de la traverse inférieure de baie 16 en vue de trois quarts avant, depuis le compartiment moteur. On y retrouve la coupelle amortisseur 22 la jambe 34 et le montant opposé 35 ainsi que la première 26 et la seconde 28 parties de la traverse inférieure de baie 16. Par ailleurs, on retrouve également la première partie 48 de paroi inférieure transversale de conduit de chauffage 38 et sa seconde bordure recourbée 46. Au surplus, on observera que la seconde partie 28 de traverse inférieure de baie 16 présente, au niveau de la rehausse de coupelle d'amortisseur 22, un second évidement 96 permettant l'évacuation d'eau mais aussi de l'air à l'intérieur du caisson transversal 82.

En se reportant sur les Figures 3 et 4, on observe bien que le caisson transversal 82, 82', d'un seul tenant, est écarté de la zone de liaison entre la bordure inférieure 45 de pare-brise 44 et la bordure de réception 62 de la traverse inférieure de baie supérieure, ou première partie 26.

Ainsi, grâce à cette disposition, en cas de choc piéton où la bordure inférieure 45 de pare-brise 44 est enfoncée vers le tablier 42 selon la flèche F, la portion de réception 70 de la première partie 26 va alors se déformer en pivotant dans un sens antihoraire autour de la zone de jonction entre la bordure de liaison 66 de la seconde partie 28 et la première partie 26. De la sorte, en se déformant et en se pliant, la portion de réception 70 absorbe l'énergie mécanique provoquée par le choc piéton et la dissipe en partie sous forme de chaleur. De plus, le pare-brise 44 et le caisson transversal 82, 82' étant écartés l'un de l'autre, lorsque le pare-brise 44 est enfoncé, son amplitude de mouvement correspondant à la déformation de l'unique portion de réception 70 est plus importante que celle qu'elle aurait si la bordure inférieure 45 était en appui directement contre le caisson transversal 82, 82'. En conséquence, une plus grande quantité d'énergie mécanique peut être absorbée tout en préservant le piéton lors du choc.

Au surplus, une telle disposition permet non seulement l'écoulement de l'air depuis l'extérieur vers le système de ventilation à travers le caisson transversal 82, 82', mais aussi l'évacuation de l'eau recueillie au niveau de la paroi inférieure transversale de conduit de chauffage 38.

## Revendications

1. Véhicule automobile comprenant une traverse inférieure de baie (16) avant destinée à être installée transversalement dans ledit véhicule automobile entre une bordure inférieure (45) de pare-brise (44) et un tablier (42) situé à l'aplomb du pare-brise (44), ladite traverse (16) comprenant une première (26) et une seconde (28) parties transversales sensiblement parallèles entre elles, ladite première partie (26) présentant une bordure de fixation (56) apte à être reliée audit tablier (42) et une bordure de réception (62) opposée à ladite bordure de fixation pour recevoir ladite bordure inférieure (45) de pare-brise, tandis que ladite seconde partie (28) présente d'une part, une bordure de liaison (66) reliée à ladite première partie (26) entre ladite première bordure de fixation (56) et ladite première bordure de réception (62) en divisant ladite première partie en une portion de réception (70) s'étendant vers ladite bordure de réception et en une portion de fixation (72) opposée s'étendant vers ladite bordure de fixation, et d'autre part une bordure d'appui (68) opposée à ladite bordure de liaison (66), lesdites seconde (28) et première (26) parties transversales étant destinées à former un caisson transversal (82) pour augmenter la rigidité de ladite traverse (16), tandis que ladite première partie (26) est apte à se plier le long de ladite bordure de liaison (66) lorsque ledit pare-brise (44) est enfoncé sous l'effet d'un choc ;
**caractérisé en ce que** ladite bordure d'appui (68) de ladite seconde partie (28) est apte à être reliée audit tablier (42) de manière à former ledit caisson transversal (82) entre ladite seconde partie (28) et ladite portion de fixation (72) de ladite première partie (26) dans une position écartée de ladite bordure inférieure de pare-brise, tandis que ladite portion de réception (70) s'étend entre ledit caisson transversal (82) et ladite bordure inférieure (45) de pare-brise.

2. Véhicule automobile selon la revendication 1, **caractérisé en ce que** ladite portion de fixation (72) de ladite première partie présente une zone transversale (78) longeant ladite portion de réception (72) sensiblement perpendiculairement à ladite seconde partie (28).

3. Véhicule automobile selon la revendication 1 ou 2, **caractérisé en ce que** ladite seconde partie (28) présente un évidement (30) formant une ouverture d'entrée à l'intérieur du caisson transversal (82).

4. Véhicule automobile selon l'une quelconque des revendications 1 à 3, **caractérisé en ce que** ledit véhicule comporte en outre une paroi inférieure transversale de conduit de chauffage (38) apte à être reliée audit tablier (42), et **en ce que** ladite bordure de fixation (56) de ladite première partie (26) est reliée audit tablier par l'intermédiaire de ladite paroi inférieure transversale (38).

5. Véhicule automobile selon la revendication 4, **caractérisé en ce que** ladite bordure d'appui (68) de ladite seconde partie (28) est reliée audit tablier (42) par l'intermédiaire de ladite paroi inférieure transversale (38).

6. Véhicule automobile selon la revendication 4 ou 5, **caractérisé en ce que** ladite paroi inférieure transversale de conduit de chauffage (38) présente une première bordure transversale de paroi (36) apte à recevoir ladite bordure de fixation (56) de ladite première partie (26), et une seconde bordure transversale de paroi opposée (46), apte à s'étendre à l'aplomb de ladite bordure de réception (62) de ladite première partie.

7. Véhicule automobile selon la revendication 6, **caractérisé en ce que** ladite paroi inférieure transversale de conduit de chauffage (38) présente une portion transversale encaissée (50) le long de ladite première bordure transversale de paroi (36) dans un sens opposé à ladite portion de fixation (72) de ladite première partie (26).

8. Véhicule automobile selon la revendication 7, **caractérisé en ce que** ladite portion transversale encaissée (50) présente un orifice (54) pour former une ouverture d'évacuation.

9. Véhicule automobile selon l'une quelconque des revendications 4 à 8, **caractérisé en ce que** ledit véhicule comporte en outre, deux coupelles latérales d'amortisseurs (20, 22) situées sensiblement à l'aplomb de ladite bordure de réception (70) de ladite première partie (26), et **en ce que** ladite paroi inférieure transversale de conduit de chauffage (38) vient prendre appui sur lesdites coupelles latérales d'amortisseurs (20, 22).

10. Véhicule automobile selon l'une quelconque des revendications 1 à 9, **caractérisé en ce que** lesdites première (26) et seconde (28) parties transversales de ladite traverse (16) sont réalisées dans un matériau métallique déformable.

## Patentansprüche

1. Kraftfahrzeug, das einen unteren vorderen Fensterquerträger (16) umfasst, der dazu bestimmt ist, quer in dem Kraftfahrzeug zwischen einem unteren Rand (45) der Windschutzscheibe (44) und einer Schürze (42), die senkrecht zu der Windschutzscheibe (44) liegt, installiert zu werden, wobei der Querträger (16) einen ersten (26) und einen zweiten (28) Querteil umfasst, die zueinander im Wesentlichen parallel sind, wobei der erste Teil (26) einen Befestigungsrand (56) aufweist, der geeignet ist, um mit der Schürze (42) verbunden zu werden, und einen Aufnahmerand (62), der dem Befestigungsrand gegenüberliegt, um den unteren Windschutzscheibenrand (45) aufzunehmen, während der zweite Teil (28) einerseits einen Verbindungsrand (66) aufweist, der mit dem ersten Teil (26) zwischen dem ersten Befestigungsrand (56) und dem ersten Aufnahmerand (62) verbunden ist, indem er den ersten Teil in einen Aufnahmeabschnitt (70), der sich zu dem Aufnahmerand erstreckt, und einen gegenüberliegenden Befestigungsabschnitt (72), der sich zu dem Befestigungsrand erstreckt, unterteilt, und andererseits einen Auflagerand (68), der dem Verbindungsrand (66) gegenüberliegt, wobei der zweite (28) und der erste (26) Querteil dazu bestimmt sind, einen Querkasten (82) zu bilden, um die Steifigkeit des Querträgers (16) zu erhöhen, während der erste Teil (26) angepasst ist, sich entlang des Verbindungsrands (66) zu falten, wenn die Windschutzscheibe (44) unter der Einwirkung eines Stoßes eingedrückt wird,
**dadurch gekennzeichnet, dass** der Auflagerand (68) des zweiten Teils (28) geeignet ist, um mit der Schürze (42) derart verbunden zu werden, dass der Querkasten (82) zwischen dem zweiten Teil (28) und dem Befestigungsabschnitt (72) des ersten Teils (26) in einer von dem unteren Windschutzscheibenrand beabstandete Position ausgebildet wird, während sich der Aufnahmeabschnitt (70) zwischen dem Querkasten (82) und dem unteren Windschutzscheibenrand (45) erstreckt.

2. Kraftfahrzeug nach Anspruch 1, **dadurch gekennzeichnet, dass** der Befestigungsabschnitt (72) des ersten Teils eine Querzone (78) entlang des Aufnahmeabschnitts (70) im Wesentlichen senkrecht zu dem zweiten Teil (28) aufweist.

3. Kraftfahrzeug nach Anspruch 1 oder 2, **dadurch gekennzeichnet, dass** der zweite Teil (28) eine Aussparung (30) aufweist, die eine Eingangsöffnung in das Innere des Querkastens (82) bildet.

4. Kraftfahrzeug nach einem der Ansprüche 1 bis 3, **dadurch gekennzeichnet, dass** das Fahrzeug ferner eine untere Heizungsleitungsquerwand (38) umfasst, die geeignet ist, um mit der Schürze (42) verbunden zu werden, und dass der Befestigungsrand (56) des ersten Teils (26) mit der Schürze über die untere Querwand (38) verbunden ist.

5. Kraftfahrzeug nach Anspruch 4, **dadurch gekennzeichnet, dass** der Auflagerand (68) des zweiten Teils (28) mit der Schürze (42) über die untere Querwand (38) verbunden ist.

6. Kraftfahrzeug nach Anspruch 4 oder 5, **dadurch gekennzeichnet, dass** die untere Heizungsleitungsquerwand (38) einen ersten Wandquerrand (36) aufweist, der geeignet ist, um den Befestigungsrand (56) des ersten Teils (26) aufzunehmen, und einen zweiten gegenüberliegenden Wandquerrand (46), der geeignet ist, um sich senkrecht zu dem Aufnahmerand (62) des ersten Teils zu erstrecken.

7. Kraftfahrzeug nach Anspruch 6, **dadurch gekennzeichnet, dass** die untere Heizungsleitungsquerwand (38) einen eingelassenen Querabschnitt (50) entlang des ersten Wandquerrands (36) in eine Richtung entgegengesetzt zu dem Befestigungsabschnitt (72) des ersten Teils (26) aufweist.

8. Kraftfahrzeug nach Anspruch 7, **dadurch gekennzeichnet, dass** der eingelassene Querabschnitt (50) eine Öffnung (54) aufweist, um eine Auslassöffnung zu bilden.

9. Kraftfahrzeug nach einem der Ansprüche 4 bis 8, **dadurch gekennzeichnet, dass** das Fahrzeug außerdem zwei seitliche Dämpferschalen (20, 22) umfasst, die im Wesentlichen senkrecht zu dem Aufnahmerand (70) des ersten Teils (26) liegen, und dass die untere Heizungsleitungsquerwand (38) auf den seitlichen Dämpferschalen (20, 22) zum Aufliegen kommt.

10. Kraftfahrzeug nach einem der Ansprüche 1 bis 9, **dadurch gekennzeichnet, dass** der erste (26) und der zweite (28) Querteil des Querträgers (16) aus einem verformbaren metallischen Werkstoff hergestellt sind.

## Claims

1. Motor vehicle comprising a lower crossbeam (16) for a front window opening intended to be installed transversely in said motor vehicle between a lower edge (45) of a windshield (44) and a bulkhead (42) situated plumb with the windshield (44), said crossbeam (16) comprising a first (26) and a second (28) transverse part which are substantially parallel to one another, said first part (26) having a fixing edge (56) that can be connected to said bulkhead (42) and a receiving edge (62) opposite said fixing edge to accept said windshield lower edge (45), while said second part (28) has, firstly, a connecting edge (66) connected to said first part (26) between said first fixing edge (56) and said first receiving edge (62), thereby dividing said first part into a receiving portion (70) extending toward said receiving edge and an opposite fixing portion (72) extending toward said fixing edge and, secondly, a resting edge (68) opposite said connecting edge (66), said second (28) and first (26) transverse parts being intended to form a transverse box structure (82) to increase the rigidity of said crossbeam (16), whereas said first part (26) is able to bend along said connecting edge (66) when said windshield (44) is pushed in under the effect of an impact,
**characterized in that** said resting edge (68) of said second part (28) can be connected to said bulkhead (42) in such a way as to form said transverse box structure (82) between said second part (28) and said fixing portion (72) of said first part (26) in a position distant from said windshield lower edge, whereas said receiving portion (70) extends between said transverse box structure (82) and said windshield lower edge (45).

2. Motor vehicle according to Claim 1, **characterized in that** said fixing portion (72) of said first part has a transverse zone (78) running alongside said receiving portion (70) substantially perpendicular to said second part (28).

3. Motor vehicle according to either of Claims 1 and 2, **characterized in that** said second part (28) has a recess (30) forming an inlet opening providing access to the inside of the transverse box structure (82).

4. Motor vehicle according to any one of Claims 1 to 3, **characterized in that** said vehicle further comprises a heating duct transverse lower wall (38) able to be connected to said bulkhead (42), and **in that** said fixing edge (56) of said first part (26) is connected to said bulkhead via said transverse lower wall (38).

5. Motor vehicle according to Claim 4, **characterized in that** said resting edge (68) of said second part (28) is connected to said bulkhead (42) via said transverse lower wall (38).

6. Motor vehicle according to either of Claims 4 and 5, **characterized in that** said heating duct transverse lower wall (38) has a first wall transverse edge (36), able to receive said fixing edge (56) of said first part (26), and an opposite second wall transverse edge (46), able to extend plumb with said receiving edge (62) of said first part.

7. Motor vehicle according to Claim 6, **characterized in that** said heating duct transverse lower wall (38) has a transverse portion (50) which is sunken along said first wall transverse edge (36) in an opposite direction to said fixing portion (72) of said first part (26).

8. Motor vehicle according to Claim 7, **characterized in that** said sunken transverse portion (50) has an orifice (54) to form a discharge opening.

9. Motor vehicle according to any one of Claims 4 to 8, **characterized in that** said vehicle further comprises two lateral shock-absorber cups (20, 22) situated substantially plumb with said receiving edge (70) of said first part (26), and **in that** said heating duct transverse lower wall (38) rests on said lateral shock-absorber cups (20, 22).

10. Motor vehicle according to any one of Claims 1 to 9, **characterized in that** said first (26) and second (28) transverse parts of said crossbeam (16) are made of a deformable metallic material.
